Europäisches Patentamt

European Patent Office

Office européen des brevets

(11) Veröffentlichungsnummer: **0 366 872**
**A2**

(12) ## EUROPÄISCHE PATENTANMELDUNG

(21) Anmeldenummer: **89113401.7**

(22) Anmeldetag: **21.07.89**

(51) Int. Cl.5: **A61C 13/20**

(30) Priorität: **02.11.88 DE 3837131**

(43) Veröffentlichungstag der Anmeldung:
**09.05.90 Patentblatt 90/19**

(84) Benannte Vertragsstaaten:
**AT BE CH DE ES FR GB GR IT LI LU NL SE**

(71) Anmelder: **SCHÜTZ-DENTAL GMBH**
**Homburger Strasse 64**
**D-6365 Rosbach(DE)**

(72) Erfinder: **Wagner, Markus**
**Friedensstrasse 1**
**D-6380 Bad Homburg(DE)**

(74) Vertreter: **Schlagwein, Udo, Dipl.-Ing.**
**Anwaltsbüro Ruppert & Schlagwein**
**Frankfurter Strasse 34**
**D-6350 Bad Nauheim(DE)**

(54) **Verfahren zum Erzeugen einer Gussform sowie Garnitur mit Vorrichtungen zur Durchführung dieses Verfahrens.**

(57) Bei einem Verfahren zur Erzeugung einer Guß-form für eine Modellgußprothese wird ein Modellsok-kelformer benutzt, dessen Mantel (2) genau gleichen Querschnitt hat wie der Mantel (10) einer Doublierkü-vette (9). Dadurch kann man den Mantel (2) des Modellsockelformers auf seinen Boden (1) fixieren, wenn man diesen überkopf in die Doublierküvette (9) bis auf das in der Doublierung (18) sitzende Arbeits-modell (19) geschoben hat. Nimmt man anschlie-ßend nach Entfernen des Bodens (1) das Arbeitsmo-dell (19) aus der Doublierküvette (9), so gelangt durch den Mantel (2) der Boden (1) genau gleich tief in die Doublierküvette wie zuvor bei eingesetztem Arbeitsmodell.

Fig. 5

EP 0 366 872 A2

## Verfahren zum Erzeugen einer Gußform für eine Modellgußprothese sowie Garnitur mit Vorrichtungen zur Durchführung dieses Verfahrens

Die Erfindung betrifft ein Verfahren zum Erzeugen einer Gußform für eine Modellgußprothese, bei welchem in einem Modellsockelformer nach dem split-cast-System ein Arbeitsmodell erzeugt, nach diesem Arbeitsmodell in einer Doublierküvette eine Doublierung angefertigt und hiermit zunächst ein Einbettmassemodell hergestellt wird. Weiterhin betrifft die Erfindung eine Garnitur mit Vorrichtungen zur Durchführung dieses Verfahrens.

In der dentalen Modellgußtechnik wird zunächst durch Ausgießen des im Mund des Patienten erzeugten Abdruckes in einem Modellsockelformer ein Arbeitsmodell aus Gips erstellt. Um dieses Arbeitsmodell im Artikulator stets gleich auszurichten, werden in der Unterseite des Sockels des Arbeitsmodelles Positioniervertiefungen vorgesehen, die meist die Form von zwei sich kreuzenden Nuten haben. Das Arbeitsmodell setzt man anschließend in eine Doublierküvette ein und erzeugt in ihr durch Aufbringen einer Silikonmasse eine Negativform, welche als Doublierung bezeichnet wird. In derselben Doublierküvette kann anschließend durch Ausgießen der Doublierung ein Einbettmassemodell erzeugt werden. Dieses ist dann zu modellieren, mit Gußkanälen zu versehen und anschließend in einem Muffelformer mit einer feuerfesten Masse zu überbetten.

Nachteilig bei dem bekannten Verfahren ist es, daß das im Modellsockelformer erzeugte Arbeitsmodell und das in der Doublierküvette hergestellte Einbettmassemodell nicht hinsichtlich ihres Sockels identisch übereinstimmen. Dadurch kann das Einbettmassemodell nicht im Artikulator in eine definierte Relation zum Gegenkiefer gebracht werden.

Der Erfindung liegt die Aufgabe zugrunde, ein Verfahren der eingangs genannten Art so auszubilden, daß mit ihm ein Einbettmassemodell erzeugt werden kann, welches auch hinsichtlich seines Sockels identisch mit dem Arbeitsmodell übereinstimmt, so daß es im Artikulator exakt positioniert werden kann. Weiterhin soll eine Garnitur mit Vorrichtungen zur Durchführung dieses Verfahrens geschaffen werden.

Die erstgenannte Aufgabe wird erfindungsgemäß durch folgende Verfahrensschritte gelöst:

a) Mittels des Modellsockelformers wird ein Arbeitsmodell erzeugt, dessen Sockel exakt in die Doublierküvette paßt.

b) Das Arbeitsmodell wird mit seinem Sockel nach unten weisend in einer festgelegten Position in die Doublierküvette gesetzt, darüber von oben ein Deckel eingeschoben und Doubliermasse eingefüllt.

c) Der Deckel mit der Doublierung und dem von dieser eingebetteten Arbeitsmodell wird in umgekehrter Richtung in die Doublierküvette gesetzt, so daß die Unterseite des Deckels die gleiche Position einnimmt wie zuvor die Unterseite des Sockels.

d) Der Boden des Modellsockelformers wird in die Doublierküvette bis auf die nunmehr nach oben weisende Unterseite des Sockels des Arbeitsmodelles geschoben.

e) Der Mantel des Sockelformers wird auf den aus der Dublierküvette ragenden Teil des Bodens des Modellsockelformers bis gegen die obere Stirnfläche der Doublierküvette geschoben und dort fixiert.

f) Der Boden des Modellsockelformers und das Arbeitsmodell werden der Doublierküvette entnommen und danach der Boden mit dem Mantel wieder in die Doublierküvette eingesetzt, so daß eine Gußform für ein Einbettmassemodell entsteht.

g) Einbettmasse wird durch zumindest eine Öffnung im Boden des Modellsockelformers eingegeben.

Durch diese Verfahrensweise entsteht ein Einbettmassemodell, welches auch hinsichtlich seines Sockels exakt mit dem Arbeitsmodell übereinstimmt. Deshalb kann das Einbettmassemodell im Artikulator in eine exakte Relation zum Gegenkiefer gebracht werden. Trotz dieses gegenüber der bisherigen Verfahrensweise großen Vorteils ist das Verfahren nicht aufwendiger als das bisherige. Durch den in die Doublierküvette eingesetzten Boden des Modellsockelformers mit seinem Mantel als Höhenfixierung wird in der Doublierküvette der Raum oberhalb der Doublierung beim Einbringen der Einbettmasse genau in derjenigen Höhe begrenzt, die der Höhe des Sockels des Arbeitsmodells entspricht.

Die zweitgenannte Aufgabe, nämlich die Schaffung einer Garnitur mit Vorrichtungen zur Durchführung des erfindungsgemäßen Verfahrens, welche einen aus einem Boden und einem von ihr lösbaren, den Boden außenseitig umgreifenden Mantel gebildeten Modellsockelformer zum Erzeugen eines mit Fixiervertiefungen in seiner Bodenfläche versehenen Arbeitsmodells und eine Doublierküvette zum Erzeugen einer Doublierung aufweist, wird erfindungsgemäß dadurch gelöst, daß der Mantel des Modellsockelformers im Querschnitt identisch mit dem Mantel der Doublierküvette ausgebildet ist und der Boden des Modellsockelformers eine solche Höhe aufweist, daß er aus der Doublierküvette ragt, wenn er überkopf in die Doublierküvette eingesetzt ist und auf der Unterseite des Sockels des Arbeitsmodelles aufsitzt, wenn dieses Arbeitsmodell überkopf zusammen mit dem Deckel der Doublierküvette und der Doublierung als Einheit in der Doublierküvette eingesetzt ist.

Mit den Vorrichtungen einer solchen Garnitur läßt sich auf einfache Weise ein Einbettmassemodell erzeugen, welches hinsichtlich seines Sockels exakt mit dem im Modellsockelformer erzeugten Arbeitsmodell übereinstimmt. Durch die maßliche Übereinstimmung des Querschnittes des Mantels des Modellsockelformers und des Mantels der Doublierküvette stimmen die Außenkonturen des Sockels des Arbeitsmodelles und des Einbettmassemodelles identisch überein. Da der Mantel des Modellsockelformers als Höhenanschlag beim Einsetzen des Bodens des Modellsockelformers in die Doublierküvette benutzt wird, ergibt sich beim Einbettmassemodell zwangsläufig auch eine gleiche Sockelhöhe wie beim Arbeitsmodell.

Beim Modellsockelformer muß der Boden vollständig geschlossen sein, damit der Gips nicht nach unten aus dem Modellsockelformer austreten kann. Verwendet man den Boden des Modellsockelformers als obere Formbegrenzung für die Doublierküvette beim Erzeugen des Einbettmassemodells, dann muß die Einbettmasse durch diesen Boden in die Form eingebracht werden. Der Boden vermag beide Aufgaben zu erfüllen, wenn er zum Einbringen der Einbettmasse verschließbare Durchlässe aufweist.

Besonders einfach sind die Durchlässe zu verschließen, wenn sie sich zur Außenseite hin konisch verjüngen und in ihnen jeweils ein entsprechender Einsatz mit einer konischen Mantelfläche eingesetzt ist.

Statt im Boden verschließbare Durchlässe vorzusehen, kann man gemäß einer anderen Ausgestaltung der Erfindung für den Modellsockelformer zwei wahlweise zu verwendende Böden vorsehen, von denen nur einer Durchlässe hat.

Die Höhenfixierung des Mantels auf dem Boden des Modellsockelformers beim Erstellen des Arbeitsmodelles und des Einbettmassemodelles kann mit sehr einfachen Mitteln erfolgen, wenn hierzu auf dem Boden des Modellsockelformers im Mantel eine Gewindebohrung vorgesehen ist, in die eine durch den Mantel bis gegen den Boden zu schraubende Klemmschraube geschraubt ist.

Die Erfindung läßt zahlreiche Ausführungsformen zu. Zur weiteren Verdeutlichung ihres Grundprinzips sind die Vorrichtungen zur Durchführung des Verfahrens perspektivisch und in zwei sich bei dem Verfahren ergebenden Stellungen dargestellt. Im einzelnen zeigt die Zeichnung in

Fig. 1 eine perspektivische Darstellung eines Modellsockelformers,

Fig. 2 eine perspektivische Darstellung eines Verschlusses für einen Durchlaß des Modellsockelformers,

Fig. 3 eine Doublierküvette in perspektivischer Darstellung,

Fig. 4 einen Deckel der Doublierküvette in perspektivischer Darstellung,

Fig. 5 einen Schnitt durch die Doublierküvette, in die von unten nach oben der Deckel, eine Doublierung, ein Arbeitsmodell und der Boden des Modellsockelformers eingesetzt sind.

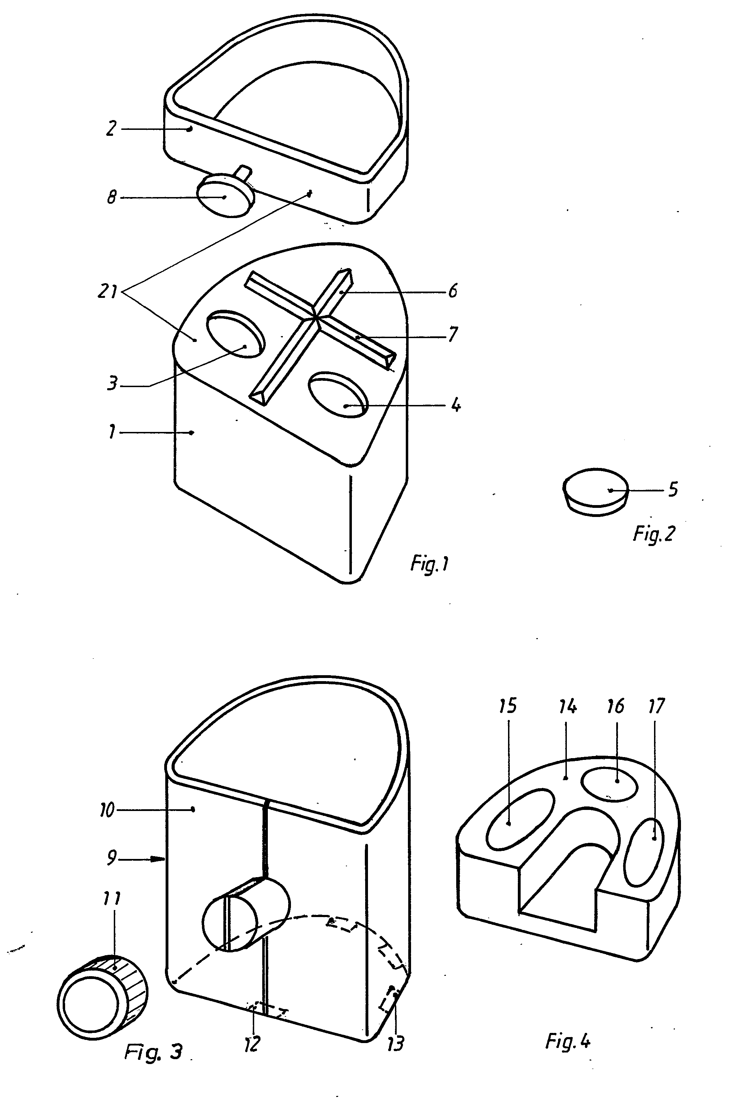

Die Figur 1 zeigt einen Modellsockelformer 21, welcher aus einem Boden 1 und einem teleskopartig auf diesen aufschiebbaren Mantel 2 besteht. Der Boden 1 ist als nach unten hin offene Hohlform ausgebildet und hat in seiner Oberseite zwei Durchlässe 3, 4, welche jeweils mit einem in Figur 2 gezeigten Einsatz 5 verschlossen werden können. Zu diesem Zweck verjüngen sich die Durchlässe 3, 4 im Querschnitt nach unten hin und der Einsatz 5 ist entsprechend konisch ausgebildet. Nach oben hin ragen aus der Oberseite des Bodens 1 zwei sich kreuzende Zentriervorsprünge 6, 7.

Im Mantel 2 ist eine Klemmschraube 8 geschraubt. Schiebt man den Mantel 2 geringfügig über den Boden 1, so kann man ihn in dieser Stellung durch Anziehen der Klemmschraube 8 fixieren. Anschließend legt man die in Figur 2 gezeigten Einsätze 5 in die Durchlässe 3 und 4. Auf diese Weise entsteht ein Modellsockelformer, mit dem ein Arbeitsmodell erzeugt werden kann, welches einen hin sichtlich seiner Kontur genau festgelegten Sockel aufweist, wobei in der Unterseite des Sockels entsprechend der Zentriervorsprünge 6, 7 Zentriervertiefungen verlaufen. Es handelt sich somit um einen Sockelformer nach dem split-cast-System.

Die Figur 3 zeigt eine Doublierküvette 9, deren Mantel 10 mittels einer Überwurfmutter 11 zusammengehalten werden kann. Wichtig für die Durchführung des erfindungsgemäßen Verfahrens ist, daß dieser Mantel 10 der Doublierküvette 9 genau den gleichen Querschnitt hat wie der Mantel 2 des Modellsockelformers 21. Dadurch kann man das Arbeitsmodell mit seinem Sockel nach unten in die Doublierküvette 9 einsetzen, bis daß er auf innenseitigen Vorsprüngen 12, 13 am unteren Rand des Mantels 10 aufsitzt.

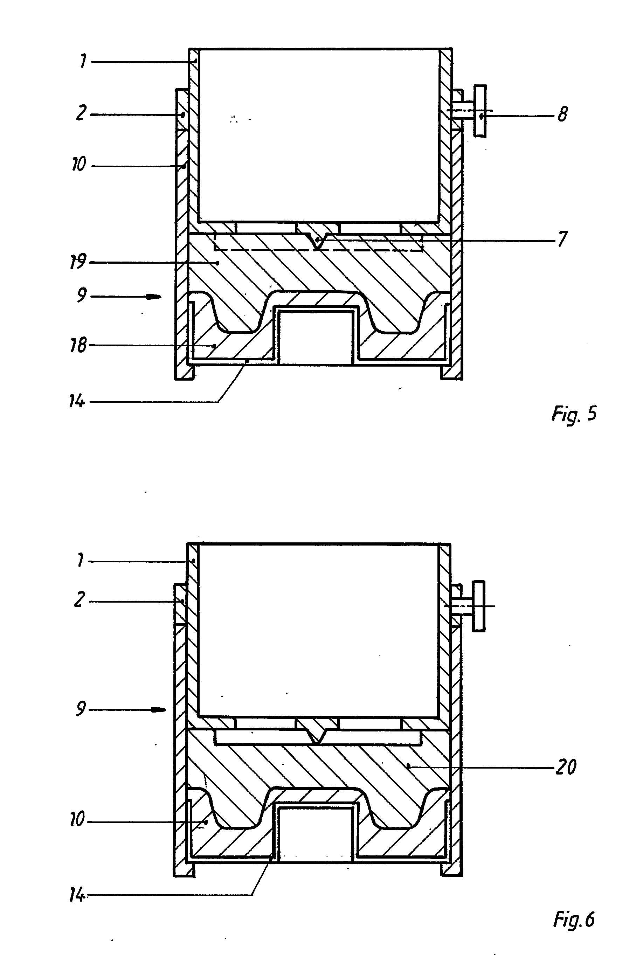

In Figur 4 ist ein üblicher Deckel 14 der Doublierküvette 9 gezeigt, der von oben her in die Doublierküvette 9 eingeschoben werden kann. Dieser Deckel 14 hat Durchbrechungen 15, 16, 17, durch die Doubliermasse in die Doublierküvette 9 zu geben ist. Es entsteht dann zwischen dem eingesetzten, in Figur 5 gezeigten Arbeitsmodell 19 und dem Deckel 14 eine ebenfalls in Figur 5 positionierte Doublierung 18.

Die aus dem Deckel 14, der Doublierung 18 und dem Arbeitsmodell 19 bestehende Einheit wird anschließend der Doublierküvette 9 entnommen und überkopf in sie eingesetzt. Diese Position ist in Schnittdarstellung in Figur 5 gezeigt. In der Doublierküvette 9 sitzt zuunterst der Deckel 14 mit der Doublierung 18, in die das Arbeitsmodell 19 eingesetzt ist.

Als nächsten Verfahrensschritt setzt man den Boden 1 überkopf in die Doublierküvette 9, bis er auf dem Arbeitsmodell 19 aufsitzt. Dann schiebt man den Mantel 2 des Modellsockelformers über den Boden 1, bis er gegen die obere Stirnfläche des Mantels 10 der Doublierküvette 9 gelangt und fixiert ihn in dieser Stellung durch Anziehen der Klemmschraube 8.

Danach entnimmt man der Doublierküvette 9 alle in sie eingesetzten Teile und zieht das Arbeitsmodell 19 aus der Doublierung 18. Anschließend setzt man den Deckel 14 mit der Doublierung 18 wieder in gleicher Ausrichtung wie zuvor in die Doublierküvette 9 und schiebt von oben her den Boden 1 in die Doublierküvette 9, bis daß der Mantel 2 auf der Doublierküvette 9 aufsitzt. Diese Position der Bauteile ist in Figur 6 gezeigt. Der Mantel 2 stellt sicher, daß der Boden 1 in genau gleichem Maße in die Doublierküvette 9 eindringt, wie wenn er auf dem Arbeitsmodell 19 aufsitzen würde. Auf diese Weise entsteht in der Doublierküvette 9 ein Hohlraum 20, der von oben her mit Einbettmasse gefüllt werden kann, so daß ein Einbettmassemodell entsteht, welches genau identisch dem Arbeitsmodell 19 ist.

Auflistung der verwendeten Bezugszeichen

1 Boden
2 Mantel
3 Durchlaß
4 Durchlaß
5 Einlaß
6 Zentriervorsprung
7 Zentriervorsprung
8 Klemmschraube
9 Doublierküvette
10 Mantel
11 Überwurfmutter
12 Vorsprung
13 Vorsprung
14 Deckel
15 Durchbrechung
16 Durchbrechung
17 Durchbrechung
18 Doublierung
19 Arbeitsmodell
20 Hohlraum
21 Modellsockelformer

Ansprüche

1. Verfahren zum Erzeugen einer Gußform für eine Modellgußprothese, bei welchem in einem Modellsockelformer nach dem split-cast-System ein Arbeitsmodell erzeugt, nach diesem Arbeitsmodell in einer Doublierküvette eine Doublierung angefertigt und hiermit zunächst ein Einbettmassemodell hergestellt wird, gekennzeichnet durch folgende Verfahrensschritte:

a) Mittels des Modellsockelformers wird ein Arbeitsmodell erzeugt, dessen Sockel exakt in die Doublierküvette paßt.

b) Das Arbeitsmodell wird mit seinem Sockel nach unten weisend in einer festgelegten Position in die Doublierküvette gesetzt, darüber von oben ein Deckel eingeschoben und Doubliermasse eingefüllt.

c) Der Deckel mit der Doublierung und dem von dieser eingebetteten Arbeitsmodell wird in umgekehrter Richtung in die Doublierküvette gesetzt, so daß die Unterseite des Deckels die gleiche Position einnimmt wie zuvor die Unterseite des Sockels.

d) Der Boden des Modellsockelformers wird in die Doublierküvette bis auf die nunmehr nach oben weisende Unterseite des Sockels des Arbeitsmodelles geschoben.

e) Der Mantel des Sockelformers wird auf den aus der Dublierküvette ragenden Teil des Bodens des Modellsockelformers bis gegen die obere Stirnfläche der Doublierküvette geschoben und dort fixiert.

f) Der Boden des Modellsockelformers und das Arbeitsmodell werden der Doublierküvette entnommen und danach der Boden mit dem Mantel wieder in die Doublierküvette eingesetzt, so daß eine Gußform für ein Einbettmassemodell entsteht.

g) Einbettmasse wird durch zumindest eine Öffnung im Boden des Modellsockelformers eingegeben.

2. Garnitur mit den erforderlichen Vorrichtungen zur Durchführung des Verfahrens nach Anspruch 1, welche einen aus einem Boden und einem von ihr lösbaren, den Boden außenseitig umgreifenden Mantel gebildeten Modellsockelformer zum Erzeugen eines mit Fixiervertiefungen in seiner Bodenfläche versehenen Arbeitsmodells und eine Doublierküvette zum Erzeugen einer Doublierung aufweist, dadurch gekennzeichnet, daß der Mantel (2) des Modellsockelformers (21) im Querschnitt identisch mit dem Mantel (10) der Doublierküvette (9) ausgebildet ist und der Boden (1) des Modellsockelformers (21) eine solche Höhe aufweist, daß er aus der Doublierküvette (9) ragt, wenn er überkopf in die Doublierküvette (9) eingesetzt ist und auf der Unterseite des Sockels des Arbeitsmodelles (19) aufsitzt, wenn das Arbeitsmodell (19) überkopf zusammen mit dem Deckel (14) der Doublierküvette (9) und der Doublierung (18) als Einheit in die Doublierküvette (9) eingesetzt ist.

3. Garnitur nach Anspruch 2, dadurch gekennzeichnet, daß der Boden (1) des Modellsockelformers (21) zum Einbringen der Einbettmasse verschließbare Durchlässe (3, 4) aufweist.

4. Garnitur nach den Ansprüchen 1 oder 2, dadurch gekennzeichnet, daß die Durchlässe (3, 4) sich zur Außenseite hin konisch verjüngen und in ihnen jeweils ein entsprechender (5) Einsatz mit einer konischen Mantelfläche eingesetzt ist.

5. Garnitur nach einem oder mehreren der vorangehenden Ansprüche, dadurch gekennzeichnet, daß für den Modellsockelformer (21) zwei wahlweise zu verwendende Böden (1) vorgesehen sind, von denen nur einer Durchlässe (3, 4) hat.

6. Garnitur nach einem oder mehreren der vorangehenden Ansprüche, dadurch gekennzeichnet, daß zur Fixierung des Mantels (2) des Modellsokkelformers (21) auf dem Boden (1) des Modellsokkelformers (21) im Mantel (2) eine Gewindebohrung vorgesehen ist, in die eine durch den Mantel (2) bis gegen den Boden (1) zu schraubende Klemmschraube (8) geschraubt ist.

Fig.1

Fig.2

Fig. 3

Fig. 4

Fig. 5

Fig.6